# EUROPEAN PATENT SPECIFICATION

(11) **EP 2 064 570 B1**
(45) Date of publication and mention of the grant of the patent: **20.08.2014**
(21) Application number: 07814470.6
(22) Date of filing: 27.08.2007
(51) Int. Cl.: G01S 19/49, G01S 19/17

(54) **POSITION ESTIMATION METHOD AND RELATED DEVICE**
POSITIONSSCHÄTZVERFAHREN UND DIESBEZÜGLICHE EINRICHTUNG
PROCÉDÉ D'ÉVALUATION DE POSITION ET DISPOSITIF ASSOCIÉ

(30) Priority: 30.08.2006 US 512535
(43) Date of publication of application: 03.06.2009
(73) Proprietor: Harris Corporation, Melbourne, FL 32919 (US)
(72) Inventor: CHAUNCEY, David, Fairport, New York 14450 (US); DOHERTY, Thomas, Webster, New York 14580 (US)
(74) Representative: Schmidt, Steffen J.
(86) International application number: PCT/US2007/076866
(87) International publication number: WO 2008/027822

(56) References cited:
- JP-A- 2003 109 146
- US-A- 5 990 793
- US-A- 6 061 021
- US-A1- 2002 008 630
- US-A1- 2003 214 397
- US-A1- 2005 001 720
- US-A1- 2005 197 769
- INGRAM S J ET AL: "UltraWideBand indoor positioning systems and their use in emergencies", POSITION LOCATION AND NAVIGATION SYMPOSIUM, 2004. PLANS 2004 MONTEREY, CA, USA 26-29 APRIL 2004, PISCATAWAY, NJ, USA,IEEE, US, 26 April 2004 (2004-04-26), pages 706-715, XP010768942, DOI: 10.1109/PLANS.2004.1309063 ISBN: 978-0-7803-8416-3

## Description

The present disclosure relates to position estimation and more particularly relates to a method and a related device to estimate position based on a combination of inertial, ranging and global positioning information.

Many occupations in society can require responding to emergent and dangerous situations. In such situations, knowledge of your position and the position of others can become paramount in responding successfully.

In one example, a device determines its position by receiving a global positioning signal in combination with using triangulation from two or more locations from which the device receives and transmits signals. The device determines an estimate of its position from the global positioning signal and the signals from the two or more locations. But, both of the above signals can be obstructed. For example, when the device is in a basement, the accuracy of the estimation of the position decreases. While the above example is useful for its intended purpose, there remains room in the art for improvement.

United States Patent Application 11/066,513 discloses a system for determining the position of a human. The system uses technology including global positioning technology to determine position.

United States Patent Application 10/802,571 discloses a system for determining the position of a human. The system uses technology including global positioning technology to determine position.

United States Patent 5,990,793 discloses a firefighter face mask having radio capability and operable to transmit a location beacon.

The present teachings generally include a method that receives inertial position information, global positioning information and ranging information with a position estimation device. The method determines an estimation of a position of the position estimation device based on a combination of the inertial position information, the global position information and the ranging information.

Further areas of applicability will become apparent from the description provided herein. It should be understood that the description and specific examples are intended for purposes of illustration only and are not intended to limit the scope of the present teachings.

Figure 1 is a perspective view of an exemplary position estimation device in accordance with the present teachings that determines an estimation of a position of the position estimation device associated with a user.

Figure 2 is a perspective view of an exemplary user associated with the position estimation device of Figure 1.

Figure 3 is a block diagram of the position estimation device in accordance with the present teachings.

Figure 4 is a diagram of a situational awareness system, multiple users having position estimation devices and relay nodes, all of which may communicate with each other in various combinations.

Figure 5 is a perspective view of an exemplary scenario in accordance with the present teachings showing multiple users and relay nodes in a situation where the estimation of the position benefits the user.

Figure 6 is a diagram in accordance with the present teachings showing a situation awareness system tracking the position of the users and the relay nodes and an accuracy of each estimation of the respective positions.

Figure 6A is an exploded view of the diagram of Figure 6 showing an identity, a status and an estimation of a position of the user and a value descriptive of an accuracy of the estimation of the position of the user.

The following description is merely exemplary in nature and is not intended to limit the present teachings, their application, or uses. It should be understood that throughout the drawings, corresponding reference numerals can indicate like or corresponding parts and features.

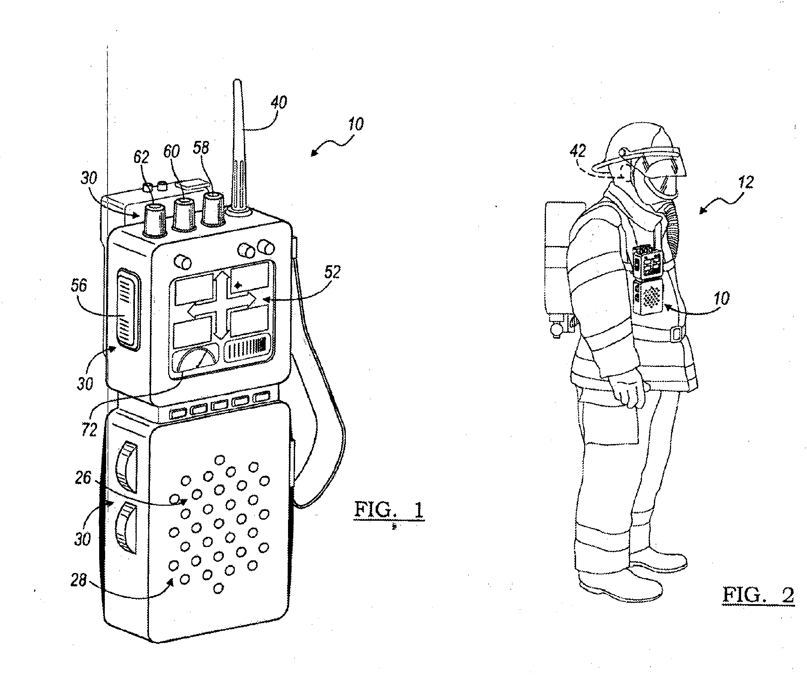

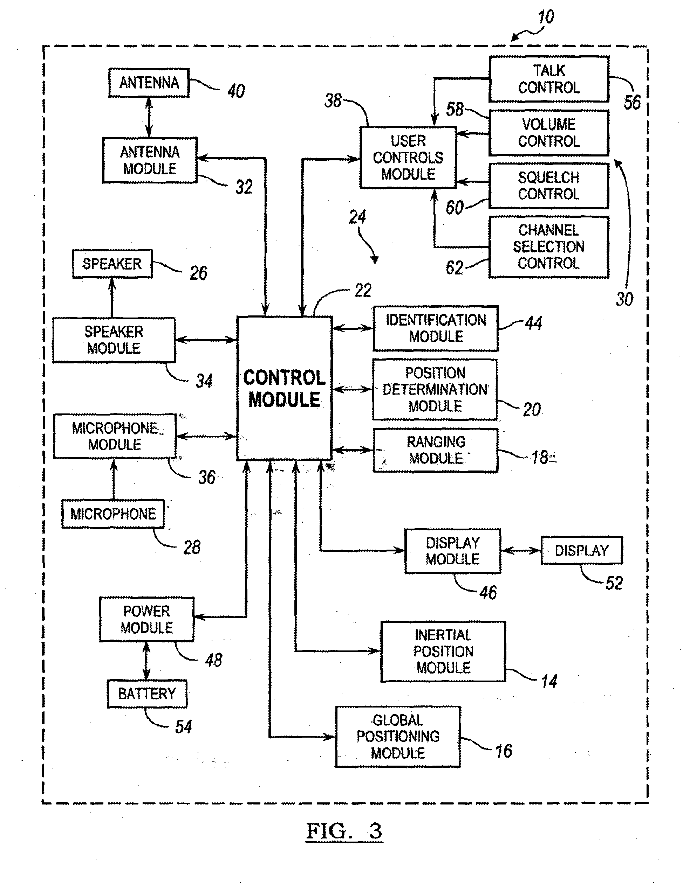

With reference to Figures 1 and 2, the present teachings generally include a position estimation device 10 carried by a user 12. With reference to Figure 3, the position estimation device 10 generally includes an inertial position module 14, a global positioning module 16 and a ranging module 18. In addition, the position estimation device 10 includes a position determination module 20. The position determination module 10 determines an estimation of a position of the position estimation device 10 based on a combination of information from the inertial position module 14, the global positioning module 16 and the ranging module 18.

A control module 22 may control and/or facilitate communication between all (or a portion of) modules 24. The position estimation device 10 further includes a speaker 26 and a microphone 28. The speaker 26 and the microphone 28 are activated (or deactivated) by the user 12 to send and/or receive communications by activating one or more user controls 30 on the position estimation device 10. The speaker 26 and the microphone 28 can be remotely activated (or deactivated).

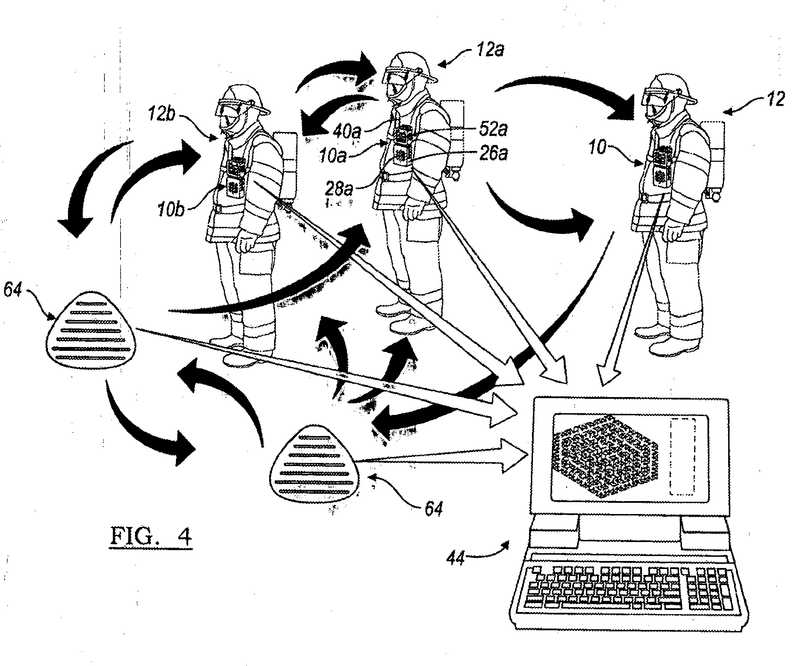

The position estimation device 10 also includes an antenna module 32, a speaker module 34, a microphone module 36 and a user controls module 38. The antenna module 32 connects to an antenna 40. The antenna module 32 can also connect to additional antennas, external antennas, an antenna 40a mounted on another position estimation device 10a (Figure 4) and combinations thereof. The global positioning module 16 and/or the ranging module 18 may have one or more antennas that may connect to the respective modules (i.e., dedicated antennas). As such, the respective modules can use the antenna 40, the dedicated antennas and a combination thereof.

The speaker module 34 connects to the speaker 26. The speaker module 34 may also connect to additional speakers, an external speaker, a user's earpiece 42 (Figure 2), a speaker 26a of another position estimation device 10a, etc. (Figure 4) and/or combinations thereof. The microphone module 36 connects to the microphone 28 (Figure 1). The microphone module 36 can connect to additional microphones, an external microphone, the user's earpiece 42, a microphone 28a of another position estimation device 10a, etc. (Figure 4) and/or combinations thereof.

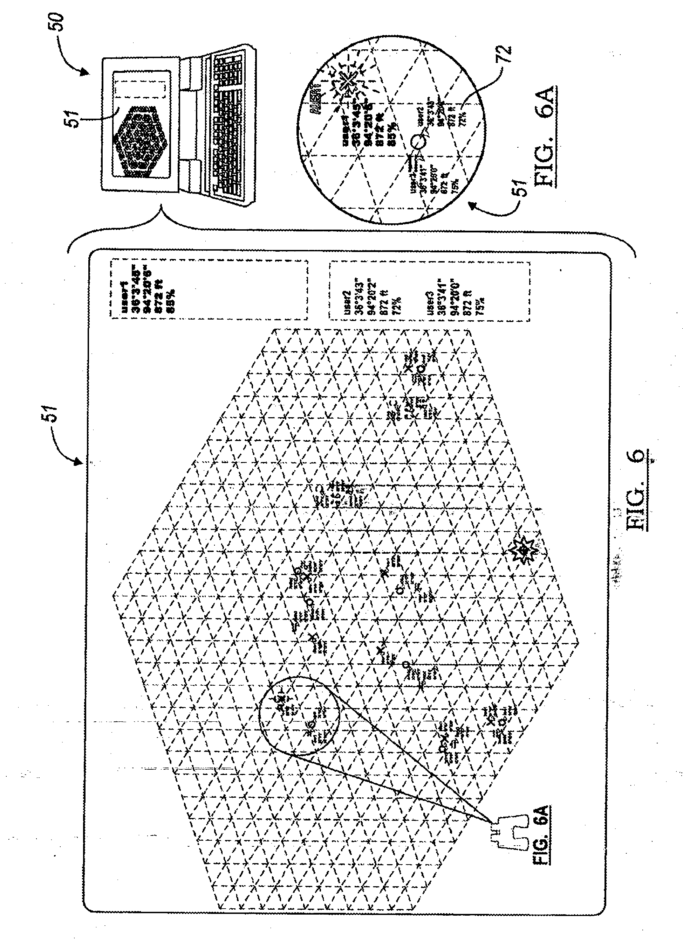

The position estimation device 10 further includes the position determination module 20, an identification module 44, a display module 46, a power module 48. The position determination module 20 and/or the control module 22 determines the estimation of the position of the estimation device 10 using a cognitive network of information from the inertial position module 14, the global positioning module 16 and the ranging module 18. The position estimation device 10 provide the position information of the position estimation device 10 to one of more of the other users 12a, etc. via the other position estimation devices 10a, and/or a situational awareness system 50, as shown in Figure 6.

The identification module 44 includes unique identifier data that is resident in the identification module 44. The unique identifier data can be resident on other modules 24. The identifier data includes a serial number, a media access control (MAC) address, an equipment number, another suitable string of information and/or combinations thereof.

The display module 46 includes a display 52 on the position estimation device 10 visible to the user 12 (Figure 2). The display 52 provides images associated with useful information to the user 12. The display 52 includes one or more screens (e.g., a liquid crystal display) and/or one or more lights (e.g., light emitting diodes) associated with certain functions (e.g., power on/off). The display module 46 can also send the images associated with the useful information to one more displays 52a of the other devices 10a, etc. and/or to a display 51 (Figure 6) of the situation awareness system 50 (Figure 4). Useful information can include position information, a value description of an accuracy of the position information, battery level, talk on, talk off, system status, etc.

The power module 48 controls and/or regulates power use of the various modules 24 of the position estimation device 10. The power module 48 connects to an internal battery 54 and/or external power sources to provide power to the position estimation device 10. The power module 48 determines the remaining amount of power available from one or more batteries 54.

The user controls module 38 connects to one or more of the following controls: a talk control 56, a volume control 58, a squelch control 60 and a channel selection control 62. The talk control 56 includes a switch or other suitable device to switch between a talk on condition and a talk off condition. With the talk control 56 in the talk on condition, the talk control permits the position estimation device 10 to transmit what is received by, for example, the microphone 28. With the talk control 56 in the talk off condition, the position estimation device 10 will not transmit but can receive transmissions. In the above example, the position estimation device 10 is a simplex or half-duplex system such that the user 12 must press or activate the talk control 56 to transmit and must release the talk control 56 to receive. In other aspects, a duplex (or full duplex) system can be used using, for example, a cellular communication standard.

The volume control 58 adjusts the volume of the speaker 26. The squelch control 60 can disable the receiver entirely if a useful signal falls to too low a value to avoid a situation where high noise signals are broadcast in the absence of desired signals. The channel selection control 62 allows the user 12 to select between channels at which the position estimation device 10 can transmit and/or receive.

The above modules 24 may be combined into a single module having suitable sub-modules. All or some of the above modules and/or the position estimation device as a whole may be contained in a handheld device or can be part of others devices such as a notebook computer, a headset, a vehicle computer, etc.

It will be appreciated that two or more of the modules 24 may be combined into a single module (e.g., a single multi-function module having multiple submodules), may be separated into multiple modules communicating between one another and/or combinations thereof. As used herein, the term module, control module component and/or device can refer to an application specific integrated circuit (ASIC), an electronic circuit, a processor (shared, dedicated, or group) and memory that executes one or more software or firmware programs, a combinational logic circuit, and/or other suitable mechanical, electrical, or electro-mechanical components that provide the described functionality. Moreover, the modules may communicate with the other modules, devices, compartments, etc. using digital and/or analog inputs and outputs and/or a suitable communications network via a wireless and/or a wired connection.

In operation, the position estimation device 10 provides the user 12 of the position estimation device 10 with an estimation of the user's position based on a fusion or combination of information available on the cognitive network. The position estimation device 10 also provides one or more values descriptive of the accuracy of the above estimation of the position of the user 12. The position information and/or the accuracy thereof are based on the combination of the information received from the inertial position module 14, the global positioning module 16 and the ranging module 18. With reference to Figure 4, the position estimation device 10 transmits the position information to various receivers such as the other users 12a, etc. carrying additional position estimation devices 10a, etc. or the situation awareness system 50 that can track multiple position estimation devices 10, 10a, etc.

The position information is determined from the combination of information from the inertial position module 14 that provides inertial information, the global positioning module 16 that provides a global positioning system (GPS) signal and a ranging module 18 that provides a ranging signal. The position estimation device takes information from the above three modules 14, 16, 18 and provides the user 12 with the position estimation of the position estimation device 10. Moreover, the position estimation device 10 provides the user 12 with the value that describes the accuracy or reliability of the position information. Furthermore, the position estimation device 10 based on the combination of information weighs the accuracy of each of the information sources from the above modules 14, 16, 18 based on, for example, a condition of the signal received by the modules 14, 16, 18. The accuracy of the signal received by the respective modules can be affected by signal strength, availability of multiple signals, noise, physical obstruction, etc. Accuracy or reliability of individual signals on which the position information is based can also be displayed on the display 52.

The inertial position module 14 includes a gyroscope and/or other suitable components to detect inertial information and changes thereto. The inertial position module 14 and/or the position determination module 20 obtain information from the global positioning module 16 and/or the ranging module 18. For example, the global positioning module 16 establishes a first reference location. The inertial position module 14 determines deviations from the first reference location such that when the user 12 (Figure 2) walks ten feet from the first reference position, the inertial position module 14 detects such movement without further input from the global positioning module 16. The inertial position module 14 can, therefore, provide relative movement information in all three dimensions. The inertial position module 14 can include (or be a part of) a suitable three dimensional accelerometer such as a 3-Axis iMEMS® Accelerometer, Model ADXL330 generally available from Analog Devices of Norwood, MA.

The global positioning module 16 receives one or more global positioning signals from the global positioning satellites. The antenna 40 (or other suitable antennas) receives signals from as many global positioning satellites as can be received by the global positioning module 16. In some instances, however, the carrier frequency at which the global positioning module 16 receives signals from the global positioning satellites is vulnerable to physical obstruction. Specifically, the signal may be obstructed by buildings, walls, dense foliage or other physical obstructions that prevent a line of sight with the antenna 40 and the global positioning satellites.

When the global positioning module 16 receives information from at least three global positioning satellites, the global positioning module 16 determines a latitude and a longitude of the position estimation device 10. When the global. positioning module receives information from at least four global positioning satellites, the global positioning module 16 provides the latitude, the longitude and an altitude of the position estimation device 10. In most circumstances, the antenna 40 is not sufficiently obstructed and the global positioning module 16 receives signals from at least six global positioning satellites.

The ranging module 18 transmits and/or receives electromagnetic waves to estimate the distance of the position estimation device 10 from another structure or transmitter. In one example, the ranging module 18 uses a time of arrival method to determine a value of the distance from the position estimation device to another object. In this regard, the ranging module 18 transmits a signal and waits for the signal to return (i.e., bounce off and return) to the ranging module 18. Based on the fixed speed of the signal, the time that the signal takes to travel out to and return from the known object, an estimation of the distance from the known object is determined.

In another example, the ranging module 18 uses a one-way distance calculation in lieu of or in addition to the above two-way (i.e., time to bounce back) calculation. In this regard, the ranging module 18 measures the time elapsed between transmission of the signal and the receipt of the signal when the clocks of the transmitter and receiver are synchronized. The distance measurement can be based on the difference between the clock times between transmission and receipt. The ranging module 18, therefore, determines multiple distances from multiple objects. As such, the ranging module 18 uses two-way and/or one-way calculations and can determine an estimated position based on, for example, a triangulation of multiple signals. It will be appreciated that as more signals are transmitted and/or received, the accuracy of the ranging module 18 can be increased.

Each piece of information available on the cognitive network and from the inertial position module 14, the global positioning module 16 and the ranging module 18 provides position information to the position determination module 20. Each piece of information from each of the modules 14, 16, 18 has an associated value of uncertainty. Even though the uncertainty from each of the modules has an associated value; it may be shown that the combination of all of the information from all of the modules 14, 16, 18 provides an overall uncertainty for the position estimation that is less than the individual uncertainties of each of the pieces of information from each module.

The position estimation device 10 provides two-way voice communication between the user 12 of the position estimation device 10 and various other parties. In the various aspects of the present teaching and with reference to Figure 1, the position estimation device 10 is a hand-held or easily carried device. In other aspects, the functionality (some or all) of the position estimation device can be incorporated into other units, such as, the relay nodes 63, the situational awareness system 50, a laptop, a vehicle, etc. With reference By way of the two-way communication and with reference to Figure 4, the position estimation device 10 can also transmit the position estimation of the position estimation device 10 to other users 12a, etc. of the other position estimation devices 10a, etc., and/or to the situational awareness system 50. Moreover, the position estimation device 10 can rely on the other position estimation devices 10a, etc. that are within communication contact. By contacting the other position estimation devices 10a, etc., the position information of the other position estimation device 10a, etc. and information relative to the position estimation device 10 is used to further reduce the uncertainty of the position estimation of the position estimation device 10.

The position determination module 20 can take the information from the inertial position module 14, the global positioning module 16, the ranging module 18, information from the situational awareness system 50, information from other devices 10a, etc. and combinations thereof and combine all of the information to provide the position estimation for the user 12 of the position estimation device 10. In one example, a Kalman filter is used to integrate or combine the information to provide the position estimation to the user 12, other users 12a, etc. and/or to the situational awareness system 50. Moreover, the Kalman filter provides the accuracy or the reliability estimation of the position estimation based on the information from the various modules 24.

Other filters may be used such as a simple Kalman filter, Schmidt's extended filter, a suitable information filter, a square root filter, a phase-locked loop filter and other filters that determine accurate continuously updated information about the position estimation device 10 and a velocity of the position estimation device 10 given only a sequence of observations about the position estimation device 10 from multiple sources. Any of the above filters can accommodate error and/or noise associated with the multiple sources.

With reference to Figures 1, 3 and 6 the display 52 and/or the display 51 of the situational awareness system 50, provides a graphical display of the position accuracy and/or reliability 72 (Figures 1 and 6A) of the position estimation and/or the reliability of each contribution to the position estimation. In addition, the display 51, 52 shows the positions of other users 12a, etc. of the other position estimation devices 10a, etc. within a selectable range. The display 51, 52 can also include a distance and/or position relative to the situational awareness system 50. The display 51, 52 can also show the position of the users 12, 12a, etc. relative to associated geodetic, topographical and/or structural information (e.g., building blueprints).

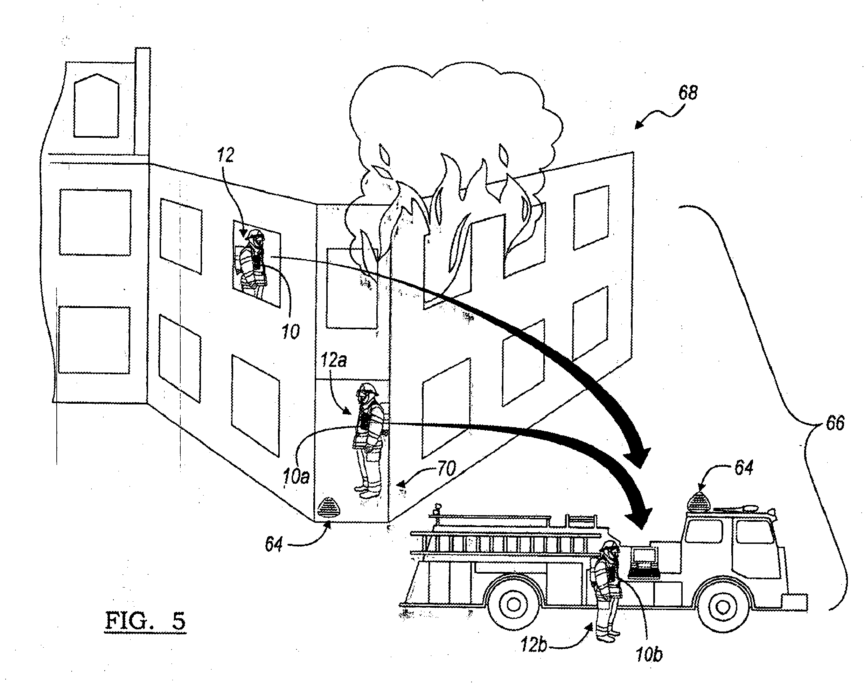

In accordance with a further aspect of the present teachings and with reference to Figures 4 and 5, the position estimation device 10 determines a value of an acceleration of the position estimation device 10. The position estimation device can determine when the value of the acceleration is greater than an acceleration threshold value. The acceleration threshold value, for example, may correlate with an acceleration value that is greater than the user 12 can achieve by either walking, running or driving in a normal fashion. As such, the acceleration threshold may correlate with being caught up in or part of an explosion, a free fall or otherwise perilous situation.

The position estimation device 10 can also detect a value of a velocity of the position estimation device. The value of the velocity is determined over a predetermined period. For example, when the velocity of the position estimation device is zero for an exemplary period, such as ten minutes, the position estimation device 10 determines that zero velocity for the predetermined period is indicative of the user 12 being otherwise pinned or tied down and thus unable to move. In this regard, the position estimation device 10 communicates the situation (e.g., being pinned down or an explosion) to the other users 12a, etc. and/or to the situation awareness system 50. The above functionality can be disabled when such lying in place for extended periods is required. When either the value of the acceleration, the value of the velocity or combinations thereof of the position estimation device 10 are determined to be outside of what may be normal for the user 12, the position estimation device 10 communicates with other position estimation devices 10a, etc. and/or the situational awareness system 50 to alert those in contact that the user 12 may be in peril.

In accordance with another aspect of the present teachings, one or more relay nodes 64 are dropped in the field of operations, as illustrated in Figure 4, to further assist and augment the information received and processed by the position estimation device 10. The relay nodes 64 provide position information to the position estimation device 10 relative to the relay node 64. In one aspect, the relay nodes 64 only provide position information to the position estimation device 10, other position estimation devices 10a, etc. or the situational awareness system 50. In other aspects, the relay nodes 64 are additional position estimation devices dropped in other parts of the environment and provide any or all of the above functionality of the position estimation device 10. In the various examples, the relay nodes 64 provide inertial, global positioning and/or ranging information. The relay nodes 64 can also broadcast a position manually assigned to the relay node.

In one example and with reference to Figure 5, a first responder team 66 may enter a building 68. The first responder team 66 may include three users 12, 12a, 12b each carrying position estimation devices 10, 10a, 10b. One of the first responders may drop one of the relay nodes 64 near the entrance 70 to the building 68. As such, the relay node 64 marks the point of egress and thus a starting point in the situation. In addition, the relay nodes 64 and the position estimation devices 10, 10a, 10b may all be monitored by the situation awareness system 50, as shown in Figures 4 and 6.

As the first responder team 66 makes progress in the building 68; they drop additional relay nodes 64. For example, when the first responder team 66 makes their way into the lower levels of the building 68, which may physically obstruct the view of the sky, the first responder team 66 drops additional relay nodes 64 to improve the accuracy of their position estimation of each position estimation device 10, 10a, etc. In this regard, the global positioning module 16 may not be able to receive the GPS signal because the first responder team 66 is no longer in view of the sky. As such, the position estimation device 10 may rely on information received by the ranging module 18 and the inertial position module 14 and even poor GPS information.

Moreover, the position estimation device 10 may rely on information received from other position estimation devices 10a, 10b, other relay nodes 64, the situation awareness system 50 and combinations thereof. With all of the above information available, even with sporadic global positioning information and/or ranging information, the position determination module 20 and/or the control module 22 of each of the position estimation devices 10, 10a, 10b uses information from all (or some) of the above sources to provide the position estimation and a value of reliability thereof to the user 12 of the position estimation device 10.

In a further aspect, the position estimation device 10 based on a reduced accuracy of position information possibly from physical obstruction informs the user 12 via the display 52 to drop one of the relay nodes 64. A predetermined information accuracy threshold can be established so that when the threshold is passed, the position estimation devices instructs the user 12 to drop one of the relay nodes to improve the accuracy of the position estimator. The situational awareness system can also, based on the accuracy threshold, instruct the users 12, 12a, 12b to drop additional relay nodes 64.

## Claims

1. A method comprising:
receiving global positioning information at a global positioning module (16) of a handheld position estimation device (10);
measuring inertial position information relative to a first reference location obtained from said received global positioning information at an inertial position module (14) of said handheld position estimation device (10);
receiving ranging information at a ranging module (18) of said handheld position estimation device (10); **characterized by**
receiving, in said position estimation device, an additional position estimation information of another handheld position estimation device (10a, 10b) transmitted by said another handheld position estimation device (10a, 10b) over a communication connection; and
determining, in said position estimation device, an estimation of a position of said handheld position estimation device (10) based on a combination of said inertial position information, said global position information, said ranging information, and said received additional position estimation information.

2. The method of Claim 1, wherein said handheld position estimation device (10) receives ranging information from the other handheld position estimation device (10a, 10b).

3. The method of Claim 1, wherein said determining said estimation of said position is further based on an estimation of a position of the another handheld position estimation device (10a, 10b).

4. The method of Claim 1, further comprising determining one of when a value of an acceleration of said handheld position estimation device (10) is about greater than an acceleration threshold value, when a value of a velocity of said handheld position estimation device (10) is about zero for a threshold period and a combination thereof and transmitting an alert when one of said value of acceleration exceeds said acceleration threshold value, said value of said velocity is about zero for said threshold period and said combination thereof.

5. The method of Claim 2, further comprising displaying on said handheld position estimation device (10) the position of said handheld position estimation device (10) relative to topographical information.

6. A handheld position estimation device (10), comprising:
a global positioning module (16) adapted for providing global positioning information;
an inertial position module (14) adapted for measuring inertial position information relative to a first reference location obtained from said received global positioning information;
a ranging module (18) adapted for providing ranging information;
an antenna module (32) adapted for receiving additional position estimation information of another handheld position estimation device (10a, 10b) transmitted by said another handheld position estimation device (10a, 10b) over a communication connection;
a position determination module (20) adapted for determining an estimation of a position of the handheld position estimation device (10) based on a combination of said inertial position information, said global position information, said ranging information, said received additional position estimation information and for determining an accuracy of said estimation of said position; and
a display (52) adapted for showing said estimation of the position of the handheld position estimation device (10) and a value descriptive of said accuracy of said estimation of said position.

7. The handheld position estimation device (10) of Claim 6, wherein said position determination module (20) determines a value of an accuracy of said ranging information and wherein said display shows said value of said accuracy of said ranging information.

8. A system comprising the handheld position estimation device (10) of Claim 6, further comprising another handheld position estimation device (10a, 10b) that can receive an alert from the handheld position estimation device (10) when one of a value of an acceleration of the handheld position estimation device (10) exceeds an acceleration threshold value, when a value of a velocity of the handheld position estimation device (10) is about zero for a threshold period and a combination thereof.

9. A system comprising the handheld position estimation device of Claim 6, and further comprising a relay node (64) drop-able in the field of operation, said relay node (64) including one of a global positioning module for providing global position information, a ranging module for providing additional ranging information and a combination thereof, wherein said position determination module (20) of the handheld position estimation device (10) determines said estimation of said position based on said global position information, said ranging information and said combinations thereof of the said relay node (64).

## Patentansprüche

1. Verfahren, das umfasst:
- Empfangen globaler Positionsbestimmungsinformationen in einem globalen Positionsbestimmungsmodul (16) einer tragbaren Positionsschätzungseinrichtung (10),
- Messen von Trägheitspositionsinformationen relativ zu einem anhand der empfangenen globalen Positionsbestimmungsinformationen erhaltenen ersten Bezugsort in einem Trägheitspositionsmodul (14) der tragbaren Positionsschätzungseinrichtung (10),
- Empfangen von Entfernungsmessungsinformationen in einem Entfernungsmessungsmodul (18) der tragbaren Positionsschätzungseinrichtung (10), **gekennzeichnet durch**
- Empfangen, in der Positionsschätzungseinrichtung, zusätzlicher Positionsschätzungsinformationen einer weiteren tragbaren Positionsschätzungseinrichtung (10a, 10b), die **durch** die weitere tragbare Positionsschätzungseinrichtung (10a, 10b) über eine Kommunikationsverbindung gesendet werden, und
- Bestimmen, in der Positionsschätzungseinrichtung, einer Schätzung einer Position der tragbaren Positionsschätzungseinrichtung (10) basierend auf einer Kombination der Trägheitspositionsinformationen, der globalen Positionsinformationen, der Entfernungsmessungsinformationen und der empfangenen zusätzlichen Positionsschätzungsinformationen.

2. Verfahren nach Anspruch 1, wobei die tragbare Positionsschätzungseinrichtung (10) von der weiteren tragbaren Positionsschätzungseinrichtung (10a, 10b) Entfernungsmessungsinformationen empfängt.

3. Verfahren nach Anspruch 1, wobei das Bestimmen der Schätzung der Position ferner auf einer Schätzung einer Position der weiteren tragbaren Positionsschätzungseinrichtung (10a, 10b) basiert.

4. Verfahren nach Anspruch 1, das ferner ein Bestimmen, ob ein Wert einer Beschleunigung der tragbaren Positionsschätzungseinrichtung (10) in etwa größer als ein Beschleunigungsschwellenwert ist, ob ein Wert einer Geschwindigkeit der tragbaren Positionsschätzungseinrichtung (10) über eine Schwellenzeitspanne ungefähr null beträgt oder einer Kombination daraus, und ein Senden einer Warnung umfasst, wenn der Wert der Beschleunigung den Beschleunigungsschwellenwert übersteigt, wenn der Wert der Geschwindigkeit über die Schwellenzeitspanne ungefähr null beträgt oder im Falle einer Kombination daraus.

5. Verfahren nach Anspruch 2, das ferner das Anzeigen der Position der tragbaren Positionsschätzungseinrichtung (10) relativ zu topografischen Informationen auf der tragbaren Positionsschätzungseinrichtung (10) umfasst.

6. Tragbare Positionsschätzungseinrichtung (10) mit:
- einem globalen Positionsbestimmungsmodul (16), das dazu eingerichtet ist, globale Positionsbestimmungsinformationen bereitzustellen,
- einem Trägheitspositionsmodul (14), das dazu eingerichtet ist, Trägheitspositionsinformationen relativ zu einem anhand der globalen Positionsbestimmungsinformationen erhaltenen ersten Bezugsort zu messen,
- einem Entfernungsmessungsmodul (18), das dazu eingerichtet ist, Entfernungsmessungsinformationen bereitzustellen,
- einem Antennenmodul (32), das dazu eingerichtet ist, zusätzliche Positionsschätzungsinformationen einer weiteren tragbaren Positionsschätzungseinrichtung (10a, 10b) zu empfangen, die durch die weitere tragbare Positionsschätzungseinrichtung (10a, 10b) über eine Kommunikationsverbindung gesendet werden,
- einem Positionsbestimmungsmodul (20), das dazu eingerichtet ist, eine Schätzung einer Position der tragbaren Positionsschätzungseinrichtung (10) basierend auf einer Kombination der Trägheitspositionsinformationen, der globalen Positionsinformationen, der Entfernungsmessungsinformationen und der empfangenen zusätzlichen Positionsschätzungsinformationen zu bestimmen und die Genauigkeit der Schätzung der Position zu bestimmen, und
- einer Anzeigeeinrichtung (52), die dazu eingerichtet ist, die Schätzung der Position der tragbaren Positionsschätzungseinrichtung (10) und einen Wert darzustellen, der die Genauigkeit der Schätzung der Position veranschaulicht.

7. Tragbare Positionsschätzungseinrichtung (10) nach Anspruch 6, wobei das Positionsbestimmungsmodul (20) einen Wert der Genauigkeit der Entfernungsmessungsinformationen bestimmt, und wobei die Anzeigeeinrichtung den Wert der Genauigkeit der Entfernungsmessungsinformationen darstellt.

8. System mit der tragbaren Positionsschätzungseinrichtung (10) nach Anspruch 6, das ferner eine weitere tragbare Positionsschätzungseinrichtung (10a, 10b) umfasst, die von der tragbaren Positionsschätzungseinrichtung (10) eine Warnung empfangen kann, wenn ein Wert einer Beschleunigung der tragbaren Positionsschätzungseinrichtung (10) einen Beschleunigungsschwellenwert übersteigt, wenn ein Wert einer Geschwindigkeit der tragbaren Positionsschätzungseinrichtung (10) über eine Schwellenzeitspanne ungefähr null beträgt oder im Falle einer Kombination daraus.

9. System mit der tragbaren Positionsschätzungseinrichtung nach Anspruch 6, das ferner einen im Tätigkeitsgebiet absetzbaren Relaisknoten (64) umfasst, wobei der Relaisknoten (64) ein globales Positionsbestimmungsmodul zum Bereitstellen globaler Positionsinformationen, ein Entfernungsmessungsmodul zum Bereitstellen zusätzlicher Entfernungsmessungsinformationen oder eine Kombination daraus umfasst, wobei das Positionsbestimmungsmodul (20) der tragbaren Positionsschätzungseinrichtung (10) die Schätzung der Position basierend auf den globalen Positionsinformationen, den Entfernungsmessungsinformationen und den Kombinationen daraus des Relaisknoten (64) bestimmt.

## Revendications

1. Procédé comprenant les étapes consistant à :
recevoir une information de positionnement global au niveau d'un module (16) de positionnement global d'un dispositif (10) d'estimation de position portatif ;
mesurer une information de position inertielle par rapport à un premier emplacement de référence obtenu à partir de ladite information de positionnement global reçue au niveau d'un module (14) de position inertielle dudit dispositif (10) d'estimation de position portatif ;
recevoir une information de mesure de distance au niveau d'un module (18) de mesure de distance dudit dispositif (10) d'estimation de position portatif ; **caractérisé par** les étapes consistant à
recevoir, dans ledit dispositif d'estimation de position, une information d'estimation de position additionnelle d'un autre dispositif (10a, 10b) d'estimation de position portatif transmise par ledit autre dispositif (10a, 10b) d'estimation de position portatif sur une connexion de communication ; et
déterminer, dans ledit dispositif d'estimation de position, une estimation d'une position dudit dispositif (10) d'estimation de position portatif sur la base d'une combinaison de ladite information de position inertielle, de ladite information de position globale, de ladite information de mesure de distance, et de ladite information d'estimation de position additionnelle reçue.

2. Procédé selon la revendication 1, dans lequel ledit dispositif (10) d'estimation de position portatif reçoit une information de mesure de distance depuis l'autre dispositif (10a, 10b) d'estimation de position portatif.

3. Procédé selon la revendication 1, dans lequel ladite détermination de ladite estimation de ladite position est en outre basée sur une estimation d'une position de l'autre dispositif (10a, 10b) d'estimation de position portatif.

4. Procédé selon la revendication 1, comprenant en outre la détermination de l'un parmi un moment auquel une valeur d'une accélération dudit dispositif (10) d'estimation de position portatif est à peu près supérieure à une valeur de seuil d'accélération, un moment auquel une valeur d'une vitesse dudit dispositif (10) d'estimation de position portatif est d'environ zéro pour une période de seuil et une combinaison de ceux-ci et la transmission d'une alerte lorsque l'une parmi ladite valeur d'accélération dépasse ladite valeur de seuil d'accélération, ladite valeur de ladite vitesse est d'environ zéro pour ladite période de seuil et ladite combinaison de celles-ci.

5. Procédé selon la revendication 2, comprenant en outre l'affichage sur ledit dispositif (10) d'estimation de position portatif de la position dudit dispositif (10) d'estimation de position portatif par rapport à une information topographique.

6. Dispositif (10) d'estimation de position portatif, comprenant :
un module (16) de positionnement global adapté pour délivrer une information de positionnement global ;
un module (14) de position inertielle adapté pour mesurer une information de position inertielle par rapport à un premier emplacement de référence obtenu à partir de ladite information de positionnement global reçue ;
un module (18) de mesure de distance adapté pour délivrer une information de mesure de distance ;
un module (32) d'antenne adapté pour recevoir une information d'estimation de position additionnelle d'un autre dispositif (10a, 10b) d'estimation de position portatif transmise par ledit autre dispositif (10a, 10b) d'estimation de position portatif sur une connexion de communication ;
un module (20) de détermination de position adapté pour déterminer une estimation d'une position du dispositif (10) d'estimation de position portatif sur la base d'une combinaison de ladite information de position inertielle, de ladite information de position globale, de ladite information de mesure de distance, de ladite information d'estimation de position additionnelle reçue et pour déterminer une précision de ladite estimation de ladite position ; et
un affichage (52) adapté pour montrer ladite estimation de la position du dispositif (10) d'estimation de position portatif et une valeur descriptive de ladite précision de ladite estimation de ladite position.

7. Dispositif (10) d'estimation de position portatif selon la revendication 6, dans lequel ledit module (20) de détermination de position détermine une valeur d'une précision de ladite information de mesure de distance et dans lequel ledit affichage montre ladite valeur de ladite précision de ladite information de mesure de distance.

8. Système comprenant le dispositif (10) d'estimation de position portatif selon la revendication 6, comprenant en outre un autre dispositif (10a, 10b) d'estimation de position portatif qui peut recevoir une alerte provenant du dispositif (10) d'estimation de position portatif lors de l'un parmi un moment auquel une valeur d'une accélération du dispositif (10) d'estimation de position portatif dépasse une valeur de seuil d'accélération, un moment auquel une valeur d'une vitesse du dispositif (10) d'estimation de position portatif est d'environ zéro pour une période de seuil et une combinaison de ceux-ci.

9. Système comprenant le dispositif d'estimation de position portatif selon la revendication 6, et comprenant en outre un noeud relais (64) pouvant être installé dans le champ d'opération, ledit noeud relais (64) comprenant l'un parmi un module de positionnement global destiné à délivrer une information de position globale, un module de mesure de distance destiné à délivrer une information de mesure de distance additionnelle et une combinaison de ceux-ci, dans lequel ledit module (20) de détermination de position du dispositif (10) d'estimation de position portatif détermine ladite estimation de ladite position sur la base de ladite information de position globale, de ladite information de mesure de distance et de ladite combinaison de celles-ci dudit noeud relais (64).
